Europäisches Patentamt

European Patent Office

Office européen des brevets

(19)

(11) Veröffentlichungsnummer : **0 217 462**
**B1**

(12) # EUROPÄISCHE PATENTSCHRIFT

(45) Veröffentlichungstag der Patentschrift :
27.07.88

(21) Anmeldenummer : 86201643.3

(22) Anmeldetag : 23.09.86

(51) Int. Cl.⁴ : **F 16 C 33/20, C 08 L 27/16,**
**C 08 K 3/22, C 08 K 7/20**

(54) **Wartungsarmer Gleitlagerwerkstoff.**

(30) Priorität : 25.09.85 DE 3534133

(43) Veröffentlichungstag der Anmeldung :
08.04.87 Patentblatt 87/15

(45) Bekanntmachung des Hinweises auf die Patenterteilung : 27.07.88 Patentblatt 88/30

(84) Benannte Vertragsstaaten :
AT BE CH DE FR GB IT LI LU NL SE

(56) Entgegenhaltungen :
EP-A- 0 044 577

(73) Patentinhaber : KOLBENSCHMIDT Aktiengesellschaft
Karl-Schmidt-Strasse 8/12 Postfach 1351
D-7107 Neckarsulm (DE)

(72) Erfinder : Bickle, Wolfgang
Friedenstrasse 15
D-6831 Reilingen (DE)

(74) Vertreter : Rieger, Harald, Dr.
Reuterweg 14
D-6000 Frankfurt am Main (DE)

**Beschreibung**

Die Erfindung betrifft einen wartungsarmen Gleitlagerwerkstoff, bestehend aus einer metallischen Stützschicht und einer eine 30 bis 500 μm dicke Gleitschicht bildenden Mischung aus Polyvinylidenfluorid (PVDF) und wenigstens einem die Reib- und Gleiteigenschaften verbessernden Zusatz.

Aus der EP-A-44 577 ist ein wartungsarmer Gleitlagerwerkstoff bestehend aus Stahlstützschicht, Bronzeschicht und Gleitschicht bekannt. Auf die Stahlstützschicht ist eine 250 bis 350 μm dicke Bronzeschicht porös aufgesintert. Die 30 bis 500 μm dicke Gleitschicht besteht aus einer Mischung von 30 bis 60 Gew. % PVDF und 20 bis 50 Gew. % Blei, mit der auch die offenen Poren der Bronzeschicht vollständig ausgefüllt sind. Die Mischung aus PVDF und Blei kann gegebenenfalls noch 5 bis 30 Gew. % Polytetrafluoräthylen (PTFE) enthalten. Dieser Gleitlagerwerkstoff besitzt das bei ähnlichen Gleitlagerwerkstoffen mit metallischer Stützschicht und einer damit verbundenen Gleitschicht, die eine Matrix aus fluorhaltigem Polymerem und Bleipulver als Zusatzwerkstoff aufweist, im Betrieb üblicherweise zu erwartende mechanisch-technologische sowie physikalische Verhalten und ist in vorteilhafter Weise spanend nachbearbeitbar, so daß Schmiertaschen bzw. Schmiernuten in der Gleitfläche angebracht werden können. Die nachträgliche Bearbeitbarkeit der Gleitschicht bietet bei bereits eingebauten Buchsen die Möglichkeit, durch Reiben bzw. Feindrehen z. B. Fluchtungsfehler auszugleichen oder engere Lagerspiele zu erzielen. Der Einlaufverschleiß eines solchen fettgeschmierten Gleitlagerwerkstoffs ist äußerst gering und beträgt z. B. bei einer spezifischen Belastung von unter 10 N/mm$^2$ und hoher Gleitgeschwindigkeit von max. 3 m/s etwa 0,0015 mm. Der Gleitlagerwerkstoff ist wartungsarm durch vergleichsweise lange Nachschmierintervalle. Wegen des in der Matrix der Laufschicht enthaltenen Bleipulvers ist dieser Gleitlagerwerkstoff jedoch für bestimmte Gebiete der Technik, bei denen die Frage der Hygiene eine wichtige Rolle spielt, beispielsweise bei Maschinen der Lebensmittel-, Haushaltsgeräte-, der pharmazeutischen und der Verpackungsindustrie und bei medizinischen Geräten, nicht einsetzbar.

Es besteht deshalb die Forderung den eingangs beschriebenen wartungsarmen Gleitlagerwerkstoff dahingehend zu verbessern, daß den Ansprüchen an die Hygiene vollauf Rechnung getragen ist, andererseits seine hohe Belastbarkeit, niedrige Reibungszahl, Wartungsarmut, geringer Verschleiß, gute Einbettfähigkeit von Schmutz und Fremdstoffen, seine ausgezeichneten physikalischen Eigenschaften sowie seine Beständigkeit gegenüber den meisten Chemikalien nicht beeinträchtigt werden und keine Ablösung der mit der metallischen Stützschicht verbundenen Gleitschicht bei dynamischer Belastung eintritt.

Erfindungsgemäß ist diese Aufgabe dadurch gelöst, daß das PVDF 0,5 bis 3,0 Gew. % eines nicht-toxischen Metalloxidpulvers mit einer Korngröße von etwa 0,05 μm und 10 bis 40 Gew. % massive Glaskugeln mit einer Körnung von 1 bis 50 μm enthält.

Vorzugsweise beträgt der Gehalt an Metalloxidpulver 1 bis 2 Gew. %. Als nicht-toxische Metalloxidpulver sind ganz besonders Chromoxid ($Cr_2O_3$) und Eisenoxid ($Fe_2O_3$) geeignet.

Es hat sich herausgestellt, daß durch Verzicht auf den Zusatz von Bleipulver die ausgezeichneten technologischen, mechanischen und physikalischen Eigenschaften des Gleitlagerwerkstoffs infolge der Beigabe der Glaskugeln, die vorteilhafterweise zur besseren Grenzflächenhaftung mit einem herkömmlichen Haftvermittler, z. B. Silan, beschichtet sind, erhalten bleiben und die Bindung zwischen der metallischen Stützschicht und der Gleitschicht den gestellten Anforderungen voll entspricht. Der Verschleißwiderstand bzw. die Druckfestigkeit sowie das inerte Verhalten gegenüber chemischen Einflüssen werden durch die Zugabe der Glaskugeln deutlich verbessert.

Im Rahmen der vorzugsweisen Ausgestaltung des Gleitlagerwerkstoffs enthält das PVDF zur Senkung des Reibwertes noch 5 bis 25 Gew. % Polytetrafluoräthylen (PTFE) mit einer Korngröße von ≤ 6 μm.

In einer besonders vorteilhaften Ausführungsform ist die metallische Stützschicht mit einem Rauhgrund versehen, der vorzugsweise aus einer porös gesinterten oder gespritzten 200 bis 350 μm dicken Bronzeschicht besteht. Die offenen Poren der Bronzeschicht mit einem Gesamtvolumen von 24 bis 45 % sind vollständig mit der die Gleitschicht bildenden Mischung aus PVDF, Metalloxidpulver und Glaskugeln ausgefüllt.

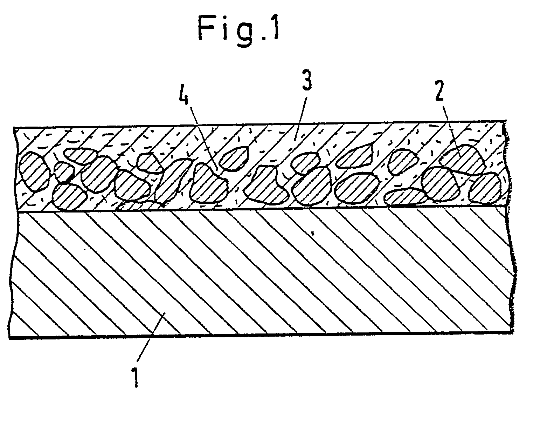

Der bevorzugt eingesetzte wartungsarme Gleitlagerwerkstoff besteht gemäß Fig. 1 aus drei Schichten : Stahlrücken 1, Bronzeschicht 2 und Gleitschicht 3 aus einer Matrix aus PVDF. Auf den Stahlrücken 1 ist eine 0,35 mm dicke Bronzeschicht 2 aus kugeligem Zinn-Blei-Bronzepulver porös aufgesintert. Die Gleitschicht 3 besteht aus einer Mischung von PVDF mit 12 Gew. % PTFE, 1,5 Gew. % Chromoxid und 22 Gew. % Glaskugeln. In einem Walzprozeß sind die Poren 4 der Bronzeschicht 2 unter gleichzeitiger Bildung der Gleitschicht 3 mit der vorstehend genannten Mischung ausgefüllt worden.

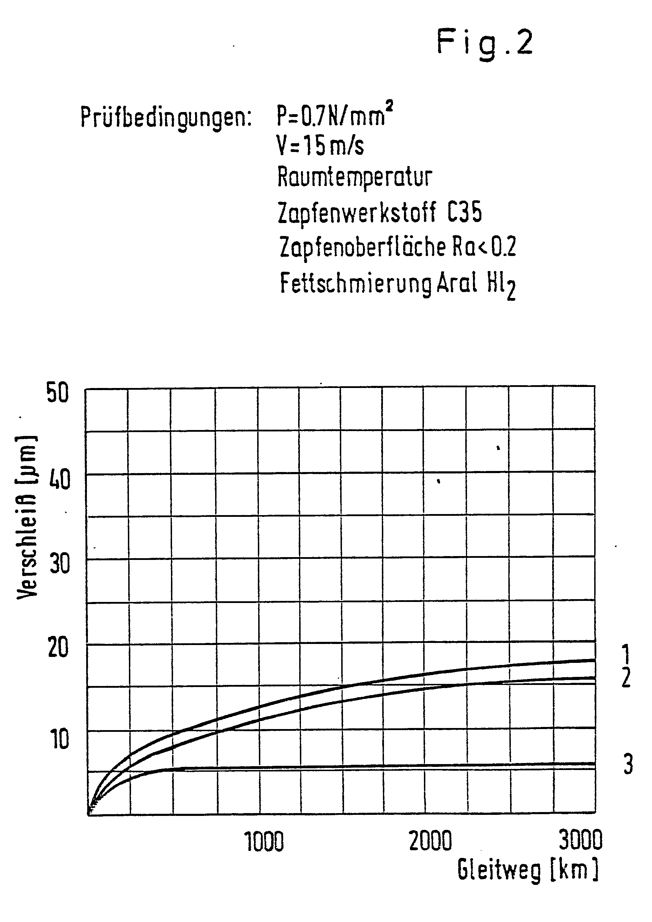

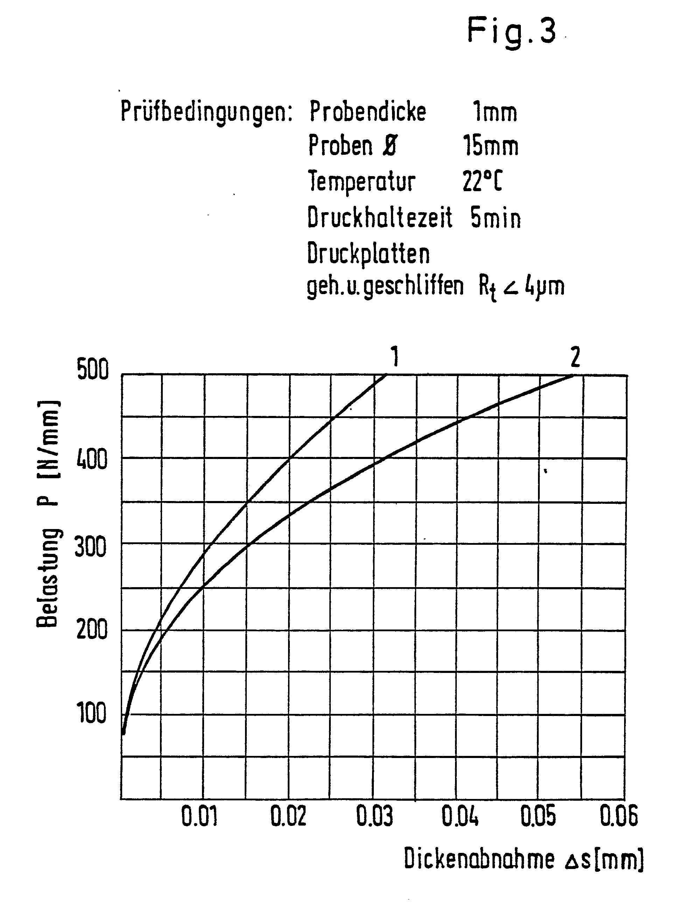

In Fig. 2 und 3 sind die das Verschleißverhalten und die statische Belastbarkeit beschreibenden Kurven für den erfindungsgemäß ausgebildeten und im Vergleich dazu für bekannte Gleitlagerwerkstoffe beispielhaft dargestellt.

In dem in Fig. 2 wiedergegebenen Diagramm ist die Abhängigkeit des Verschleißes vom Gleitweg als Maß für das Verschleißverhalten unter den angegebenen Prüfbedingungen für eine Lagerbuchse (Kurve 1), bestehend aus Stahlstützrücken, poröser Bronzeschicht und Gleitschicht aus Polyoximethylen (POM), für eine Lagerbuchse (Kurve 2), bei der das POM durch eine Mischung aus 66 Gew. % PVDF, 22 Gew. % Blei, 22 Gew. % PTFE ersetzt ist, sowie für eine Lagerbuchse (Kurve 3) aus dem erfindungsgemäßen Gleitlagerwerkstoff, bei der das POM durch eine Mischung aus 64,5 Gew. % PVDF, 12 Gew. % PTFE, 1,5 Gew. % $Cr_2O_3$ und 22 Gew. % Mikroglaskugeln ersetzt ist, dargestellt. Der Vergleich ergibt, daß die aus dem Gleitlagerwerkstoff nach der Erfindung hergestellte Lagerbuchse einen deutlich niedrigeren Verschleiß als die aus bekannten Gleitlagerwerkstoffen gefertigten Lagerbuchsen zeigt.

Ergänzend wurde gemäß Fig. 3 noch die statische Belastbarkeit — Abhängigkeit der Dickenabnahme von der Belastung — von je einer Prüfronde aus den vorstehend genannten Gleitlagerwerkstoffen, mit PVDF/Blei/PTFE-Gleitschicht (Kurve 1) und PVDF/PTFE/$Cr_2O_3$/Glaskugeln-Gleitschicht (Kurve 2) unter den angeführten Prüfbedingungen untersucht. Es zeigt sich, daß die statische Belastbarkeit des erfindungsgemäßen Gleitlagerwerkstoffs günstiger als bei dem herkömmlichen Gleitlagerwerkstoff verläuft.

## Patentansprüche

1. Wartungsarmer Gleitlagerwerkstoff bestehend aus einer metallischen Stützschicht (1) und einer eine 30 bis 500 μm dicke Gleitschicht (3) bildenden Mischung aus Polyvinylidenfluorid (PVDF) und wenigstens einem die Reib- und Gleiteigenschaften verbessernden Zusatz, dadurch gekennzeichnet, daß das PVDF 0,5 bis 3 Gew. % eines nichttoxischen Metalloxidpulvers mit einer Korngröße von etwa 0,05 μm und 10 bis 40 Gew. % massive Glaskugeln mit einer Körnung von 1 bis 50 μm enthält.

2. Wartungsarmer Gleitlagerwerkstoff nach Anspruch 1, dadurch gekennzeichnet, daß das PVDF 1 bis 2 Gew. % eines Metalloxidpulvers enthält.

3. Gleitlagerwerkstoff nach Anspruch 1, dadurch gekennzeichnet, daß das Metalloxidpulver aus Chromoxid ($Cr_2O_3$) besteht.

4. Gleitlagerwerkstoff nach Anspruch 1, dadurch gekennzeichnet, daß das Metalloxidpulver aus Eisenoxid ($Fe_2O_3$) besteht.

5. Gleitlagerwerkstoff nach den Ansprüchen 1 bis 4, dadurch gekennzeichnet, daß die Glaskugeln mit einem Haftvermittler, z. B. Silan, beschichtet sind.

6. Gleitlagerwerkstoff nach einem oder mehreren der Ansprüche 1 bis 5, dadurch gekennzeichnet, daß das PVDF noch 5 bis 25 Gew. % Polytetrafluoräthylen (PTFE) mit einer Korngröße von ≤ 6 μm enthält.

7. Gleitlagerwerkstoff nach einem oder mehreren der Ansprüche 1 bis 6, dadurch gekennzeichnet, daß sich die Gleitschicht (3) auf einem auf der Stützschicht (1) angebrachten Rauhgrund (2) befindet.

8. Gleitlagerwerkstoff nach Anspruch 7, dadurch gekennzeichnet, daß der Rauhgrund (2) aus einer porös gesinterten oder gespritzten 200 bis 350 μm dicken Bronzeschicht besteht, deren ein Gesamtvolumen von 24 bis 45 % aufweisenden offenen Poren vollständig mit der die Gleitschicht (3) bildenden Mischung ausgefüllt sind.

## Claims

1. Low-maintenance material for sliding surface bearings, which material comprises a metallic backing layer (1) and a mixture of polyvinylidene fluoride (PVDF) and at least one additive for improving the friction and sliding properties forming a sliding layer (3) having a thickness of 30 to 500 μm, characterised in that the PVDF contains 0.5 to 3.0 % by weight of a non-toxic metal oxide powder having a grain size of about 0.05 μm and 10 to 40 % by weight of solid glass spheres having a grain size of 1 to 50 μm.

2. Low-maintenance material for sliding surface bearings according to Claim 1, characterised in that the PVDF contains 1 to 2 % by weight of a metal oxide powder.

3. Material for sliding surface bearings according to Claim 1, characterised in that the metal oxide powder consists of chromic oxide ($Cr_2O_3$).

4. Material for sliding surface bearings according to Claim 1, characterised in that the metal oxide powder consists of ferric oxide ($Fe_2O_3$).

5. Material for sliding surface bearings according to Claims 1 to 4, characterised in that the glass spheres are coated with an adhesion agent, e. g. silane.

6. Material for sliding surface bearings according to one or more of Claims 1 to 5, characterised in that the PVDF also contains 5 to 25 % by weight polytetrafluoroethylene (PTFE) having a grain size of ≤ 6 μm.

7. Material for sliding surface bearings according to one or more of Claims 1 to 6, characterised in that the sliding layer (3) is situated on a rough primer (2), which has been applied on the backing layer (1).

8. Material for sliding surface bearings according to Claim 7, characterised in that the rough primer (2) consists of a sintered or sprayed-on porous bronze layer having a thickness of 200 to 350 μm, the open pores of which bronze layer, having a total volume of 24 to 45 % are completely filled by the mixture forming the sliding layer (3).

## Revendications

1. Matériau pour palier lisse nécessitant peu d'entretien, constitué d'une couche support (1) métallique et d'un mélange formant une couche de glissement (3) de 30 à 500 μm d'épaisseur et constitué de poly(fluorure de vinylidène) (PVDF) et d'au moins un additif améliorant les propriétés de friction et de glissement, caractérisé en ce que le PVDF contient de 0,5 à 3 % en poids d'une poudre d'oxyde métallique non toxique d'une granulométrie de 0,05 μm environ et de 10 à 40 % en poids de billes massives de verre d'une granulométrie de 1 à 50 μm.

2. Matériau pour palier lisse nécessitant peu d'entretien suivant la revendication 1, caractérisé en ce que le PVDF contient de 1 à 2 % en poids d'une poudre d'oxyde métallique.

3. Matériau pour palier lisse suivant la revendication 1, caractérisé en ce que la poudre d'oxyde métallique est constituée d'oxyde de chrome $(Cr_2O_3)$.

4. Matériau pour palier lisse suivant la revendication 1, caractérisé en ce que la poudre d'oxyde métallique est constituée d'oxyde de fer $(Fe_2O_3)$.

5. Matériau pour palier lisse suivant les revendications 1 à 4, caractérisé en ce que les billes de verre sont enrobées d'un agent de pontage par exemple d'un silane.

6. Matériau pour palier lisse suivant l'une ou plusieurs des revendications 1 à 5, caractérisé en ce que le PVDF contient encore de 5 à 25 % en poids de polytétrafluoroéthylène (PTFE) d'une granulométrie ≤ 6 μm.

7. Matériau pour palier lisse suivant l'une ou plusieurs des revendications 1 à 6, caractérisé en ce que la couche de glissement (3) se trouve sur un fond rugueux (2) déposé sur la couche support (1).

8. Matériau pour palier lisse suivant la revendication 7, caractérisé en ce que le fond rugueux (2) est constitué d'une couche poreuse de bronze frittée ou pulvérisée de 200 à 350 μm d'épaisseur dont des pores ouvertes représentant un volume total de 24 à 45 % sont emplis entièrement du mélange constituant la couche de glissement (3).

# Fig.1

# Fig.2

Prüfbedingungen:   $P = 0.7\,N/mm^2$
$V = 15\,m/s$
Raumtemperatur
Zapfenwerkstoff C35
Zapfenoberfläche Ra < 0.2
Fettschmierung Aral Hl$_2$

# Fig. 3

Prüfbedingungen: Probendicke    1mm
Proben Ø        15mm
Temperatur      22°C
Druckhaltezeit  5min
Druckplatten
geh.u.geschliffen  $R_t < 4\mu m$

3